# EUROPÄISCHE PATENTSCHRIFT

(11) **EP 1 040 699 B1**
(45) Veröffentlichungstag und Bekanntmachung des Hinweises auf die Patenterteilung: **13.03.2002**
(21) Anmeldenummer: 98964373.9
(22) Anmeldetag: 02.12.1998
(51) Int. Cl.: H04Q 7/38

(54) **VERFAHREN UND KOMMUNIKATIONSSYSTEM ZUR VERSCHLÜSSELUNG VON INFORMATIONEN FÜR EINE FUNKÜBERTRAGUNG UND ZUR AUTHENTIFIKATION VON TEILNEHMERN**
METHOD AND COMMUNICATIONS SYSTEM FOR CIPHERING INFORMATION FOR A RADIO TRANSMISSION AND FOR AUTHENTICATING SUBSCRIBERS
PROCEDE ET SYSTEME DE COMMUNICATION PERMETTANT DE CODER LES DONNEES D'UNE RADIOTRANSMISSION ET D'IDENTIFIER LES ABONNES

(30) Priorität: 18.12.1997 DE 19756587
(43) Veröffentlichungstag der Anmeldung: 04.10.2000
(73) Patentinhaber: SIEMENS AKTIENGESELLSCHAFT, 80333 München (DE)
(72) Erfinder: MENZEL, Christian, D-82216 Maisach (DE); HAFERBECK, Ralf, D-85716 Unterschleissheim (DE)
(86) Internationale Anmeldenummer: DE9803545
(87) Internationale Veröffentlichungsnummer: WO9933299

(56) Entgegenhaltungen:
- US-A- 5 559 886
- CAMPANINI G ET AL: "PRIVACY, SECURITY AND USER IDENTIFICATION IN NEW GENERATION RADIOMOLBILE SYSTEMS" INTERNATIONAL CONFERENCE ON DIGITAL LAND MOBILE RADIO COMMUNICATIONS,30. Juni 1987, Seiten 152-164, XP002040784

## Beschreibung

Die Erfindung betrifft ein Verfahren zur Verschlüsselung von Informationen für eine Funkübertragung und zur Authentifikation von Teilnehmern in einem Kommunikationssystem, sowie ein entsprechendes Kommunikationssystem.

Kommunikationssysteme, wie beispielsweise das Mobilfunksystem nach dem GSM-Standard (Global System for Mobile Communication), nutzen zur drahtlosen Informationsübertragung eine Funkschnittstelle, auf der Verbindungen zwischen Mobilstationen und Basisstationen eines Mobilfunknetzes aufgebaut, abgebaut und aufrechtgehalten werden können. Aus dem Aufsatz "Safety First bei europaweiter Mobilkommunikation", telcom report 16 (1993), Heft 6, Seiten 326 bis 329, ist ein Verfahren und ein System zur Verschlüsselung (ciphering) von Informationen für die Funkübertragung und zur Teilnehmerauthentifikation bekannt. Dabei identifizieren sich die mobilen Teilnehmer mit einer Einrichtung - auch als Teilnehmeridentitätsmodul oder SIM-Karte (Subscriber Identity Module) bezeichnet -, das in der Funkteilnehmerstation enthalten ist, gegenüber dem Mobilfunknetz. Der mobile Teilnehmer wird netzseitig in einer Einrichtung - z.B. einer Authentifikationseinrichtung (Authentification Center) - registriert, von der zum Schutz der Teilnehmerdaten der mobilen Teilnehmer jeweils Sicherheitsparameter und Sicherheitsalgorithmen bereitgestellt werden. Die Verschlüsselung der Informationen auf der Funkschnittstelle erfolgt teilnehmerbezogen, und ist mit der Teilnehmerauthentifikation unmittelbar gekoppelt.

In zukünftigen Kommunikationssystemen - wie z.B. einem universellen Netz (UMTS, Universal Mobile Telecommunication System, oder UPT, Universal Personal Telecommunication) - besteht die Tendenz, die Infrastruktur in ein Zugangsnetz (Access Network) und ein oder mehrere Kernnetze (Core Networks) zu unterteilen. Der Bereich des Zugangsnetzes ist dabei für Angelegenheiten der Funkschnittstelle - wie Verwaltung und Zuteilung der Funkkanäle, Kanalkodierung, Verschlüsselung über die Funkschnittstelle usw. - zuständig, wohingegen der Bereich des Kernnetzes hauptsächlich für Angelegenheiten der Teilnehmerverwaltung - wie Registrierung (Subscription), Authentifikation, Auswahl des Zugangsnetzes usw. - sowie für die Bereitstellung von Diensten verantwortlich ist. Eine Verschlüsselung der Informationen für die Funkübertragung unabhängig vom Kernnetz ist beim derzeitigen GSM-System unmöglich. Darüber hinaus wird eine Funkressource - z.B. der Funkkanal - exclusiv nur für einen Teilnehmer, nämlich den Teilnehmer, der gerade authentifiziert wurde, beim Verschlüsseln benutzt, was in zukünftigen Kommunikationssystemen insbesondere bei gleichzeitiger Nutzung einer Mobilstation durch mehrere Teilnehmer (z.B. durch ihre SIM-Karten) nicht mehr ausreicht.

Der Erfindung liegt die Aufgabe zugrunde, ein Verfahren und ein Kommunikationssystem anzugeben, das eine Verschlüsselung der Informationen auf der Funkschnittstelle unabhängig von Art und Anzahl der Kernnetze ermöglicht, sodaß sich eine funktionale Trennung von Verschlüsselung und Authentifikation ergibt.

Diese Aufgabe wird gemäß der Erfindung durch das Verfahren mit den Merkmalen des Patentanspruchs 1 und durch das Kommunikationssystem mit den Merkmalen des Patentanspruchs 12 gelöst. Weiterbildungen der Erfindung sind den Unteransprüchen zu entnehmen.

Der Gegenstand der Erfindung geht von einer Verschlüsselung der Informationen für die Funkübertragung in einem Zugangsnetz sowie einer Authentifikation in zumindest einem Kernnetz aus. Erfindungsgemäß werden zwischen einer Mobilstation, die von mehreren Teilnehmern parallel nutzbar ist, und der Basisstation über die Funkschnittstelle wechselseitig öffentliche Schlüssel gesendet, und der von der Basisstation bzw. Mobilstation empfangene öffentliche Schlüssel zur Verschlüsselung der nachfolgend über die Funkschnittstelle zu sendenden Informationen verwendet. Anhand eines privaten Schlüssels, der dem gesendeten öffentlichen Schlüssel in der Mobilstation bzw. in der Basisstation zugeordnet ist, können die von der Mobilstation bzw. Basisstation empfangenen verschlüsselten Informationen entschlüsselt werden. Im Anschluß an die Verschlüsselungsprozedur werden von einer Einrichtung der Mobilstation die Authentifikation des jeweiligen Kernnetzes und von der Einrichtung des Kernnetzes die Authentifikation des Teilnehmers anhand wechselseitig gesendeter verschlüsselter Informationen durchgeführt.

Durch das gegenseitige Übertragen von öffentlichen Schlüsseln zwischen Mobilstation und Basisstation kann die Verschlüsselung für die Funkübertragung nicht teilnehmerbezogen, sondern mobilstationsbezogen - und damit für mehrere Teilnehmer gleichzeitig - erfolgen. Es besteht eine bidirektionale vertraute Verbindung (trusted relationship), in die sich eine "Schein"-Basisstation oder eine nicht authorisierte Basisstation nicht einschalten kann. Ein weiterer Vorteil ist die funktionale Trennung von Zugangsnetz - verantwortlich für Verschlüsselung - und Kernnetz - verantwortlich für Authentifikation. Die Funkressource wird mehrfach ausgenutzt für die Verschlüsselung mehrerer Teilnehmer an der Mobilstation. Die für die Authentifikationsprozedur erforderlichen Informationen können bereits verschlüsselt übertragen werden, was im bisherigen GSM-System nicht möglich ist. Maximale Sicherheit wird durch die Kombination der Verschlüsselung mit öffentlichen/privaten Schlüsseln auf Mobilstationsebene und der nachfolgenden Authentifikation auf Teilnehmerebene erreicht. Insbesondere können durch die funktionale Trennung von Zugangsnetz und Kernnetz an das Zugangsnetz gleichzeitig mehrere Kernnetze - gegebenenfalls unterschiedlicher Netzart - parallel angeschaltet sein, und insbesondere mehrere Teilnehmer mit verschiedenen Identitäten (SIM-Karten) gleichzeitig über eine Mobilstation und in verschiedenen Kernnetzen kommunizieren.

In die sichere Verbindung, erreicht durch mehrfaches gegenseitiges Übertragen der öffentlichen Schlüssel, kann sich kein Dritter nachträglich einschleichen. Durch die anschließende Authentifikation ist gewährleistet, daß die jeweilige Gegeneinrichtung der Verbindung - d.h. die Basisstation aus Sicht der Mobilstation bzw. die Mobilstation aus Sicht der Basisstation - auch wirklich die Einrichtung ist für die sich zu Beginn der Kommunikations ausgegeben hat.

Eine vorteilhafte Weiterbildung der Erfindung sieht vor, daßzunächst von der Mobilstation ein erster öffentlicher Schlüssel zur Basisstation gesendet wird, die ihn zur Verschlüsselung der Informationen verwendet, und von der Basisstation ein öffentlicher Schlüssel zur Mobilstation gesendet wird, die ihn zur Verschlüsselung der Informationen verwendet. Danach sendet die Mobilstation einen zweiten öffentlichen Schlüssel zur Basisstation. Damit wird das Einschalten einer "Schein"-Basisstation oder der nicht authorisierten Basisstation in die Verbindung auf der Funkschnittstelle sicher verhindert. Vorzugsweise ersetzt dabei der zweite Schlüssel den ersten Schlüssel.

Gemäß einer alternativen Weiterbildung der Erfindung sendet zunächst die Basisstation einen ersten öffentlichen Schlüssel zur Mobilstation, die ihn zur Verschlüsselung der Informationen verwendet, sowie die Mobilstation einen öffentlichen Schlüssel zur Basisstation, die ihn zur Verschlüsselung der Informationen verwendet. Danach wird von der Basisstation ein zweiter öffentlicher Schlüssel zur Mobilstation gesendet. Damit wird das Einschalten der "Schein"-Basisstation oder der nicht authorisierten Basisstation in die Verbindung auf der Funkschnittstelle sicher verhindert. Vorzugsweise wird dabei der zweite Schlüssel durch den ersten Schlüssel ersetzt.

Von Vorteil ist es gemäß einer anderen Weiterbildung der Erfindung, daß von der Mobilstation eine Teilnehmeridentität des Teilnehmers und eine Authentifikationsanforderung an das Kernnetz verschlüsselt gesendet und von einer Einrichtung des Kernnetzes eine Authentifikationsantwort verschlüsselt rückgesendet wird. Daraufhin wird von der Mobilstation eine Authentifikationsprozedur zur Überprüfung der Identität des Kernnetzes ausgeführt. Damit erfolgt mobilstationsseitig eine Netzauthentifikation, was insbesondere bei mehreren Kernnetzen in Abhängigkeit davon, wo der Teilnehmer registriert ist, individuell ausgeführt werden kann.

Vorzugsweise wird von der Einrichtung des Kernnetzes eine Authentifikationsanforderung zusätzlich zu der Authentifikationsantwort verschlüsselt gesendet und von der Mobilstation eine Authentifikationsantwort an die Einrichtung verschlüsselt rückgesendet. Daraufhin kann von der Einrichtung des Kernnetzes eine Authentifikationsprozedur zur Überprüfung der Teilnehmeridentität ausgeführt werden. Dies hat den Vorteil, daß mit der Antwort der Netzeinrichtung auf die Netzauthentifikation die Anforderung zur Überprüfung der Teilnehmerauthentifikation mitgesendet und von der Netzeinrichtung unmittelbar bei Eintreffen der Antwort veranlaßt werden kann.

Ein Kommunikationssystem gemäß der Erfindung weist Speichereinrichtungen in einer Mobilstation, die von mehreren Teilnehmern parallel nutzbar ist, und in der Basisstation zum Speichern öffentlicher Schlüssel und privater Schlüssel, die den öffentlichen Schlüsseln zugeordnet sind, auf. Sendeeinrichtungen in der Mobilstation und in der Basisstation sorgen für das wechselseitige Senden der öffentlichen Schlüssel über die Funkschnittstelle. Steuereinrichtungen in der Mobilstation und in der Basisstation sind zur Verschlüsselung der nachfolgend über die Funkschnittstelle zu sendenden Informationen unter Verwendung der von der Basisstation bzw. Mobilstation empfangenen öffentlichen Schlüssel und zur Entschlüsselung der empfangenen verschlüsselten Informationen anhand des gespeicherten zugehörigen privaten Schlüssels vorgesehen. Darüber hinaus weist das Kommunikationssystem eine teilnehmerspezifische Einrichtung in der Mobilstation und eine Steuereinrichtung im jeweiligen Kernnetz zur Durchführung der Authentifikation des Kernnetzes sowie der Authentifikation der Teilnehmer anhand wechselseitig gesendeter verschlüsselter Informationen auf.

Im folgenden wird die Erfindung anhand eines Ausführungsbeispiels bezugnehmend auf zeichnerische Darstellungen näher erläutert.

Dabei zeigen
- FIG 1: das Blockschaltbild eines Kommunikationssystems mit einem Zugangsnetz für die Funkübertragung und mehreren Kernnetzen für die Authentifikation,
- FIG 2: den Nachrichtenfluß für die Verschlüsselung der Informationen auf der Funkschnittstelle zwischen einer Mobilstation und einer Basisstation des Zugangsnetzes, und
- FIG 3: den Nachrichtenfluß für die Authentifikation der Teilnehmer und der Kernnetze zwischen der Mobilstation und einer Netzeinrichtung des jeweiligen Kernnetzes.

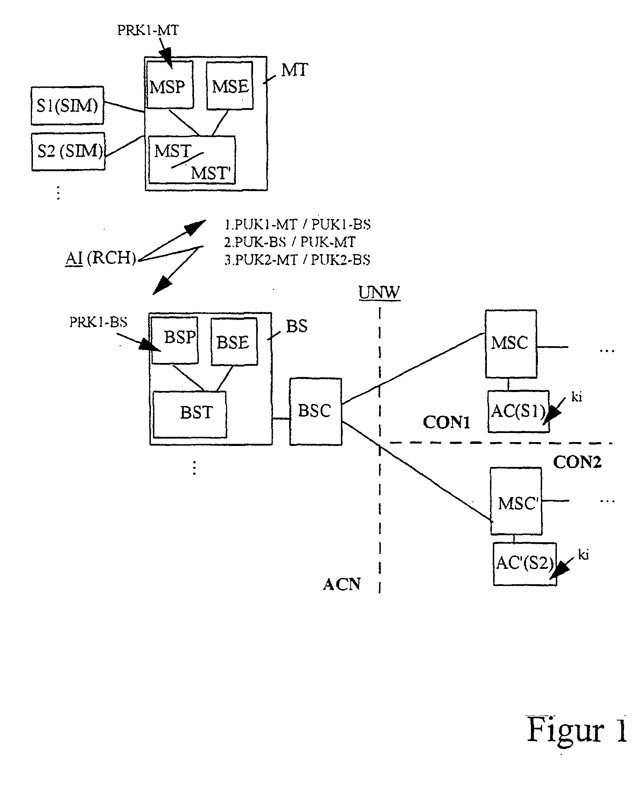

Das in FIG 1 dargestellte Kommunikationssystem ist ein Kommunikationssystem UNW - wie z.B. ein universelles UMTS- oder UPT-Netz (Universal Mobile Telecommunication System oder Universal Personal Telecommunication) -, deren Infrastruktur in ein Zugangsnetz ACN (Access Network) und in ein oder mehrere Kernnetze CON1, CON2 (Core Networks) unterteilt ist. Der Bereich des Zugangsnetzes ACN mit Einrichtungen eines Funkteilsystems - wie z.B. Basisstationen BS und daran angeschlossene Basisstationssteuerungen BSC - ist dabei für Angelegenheiten der Funkschnittstelle, wie Verwaltung und Zuteilung von Funkkanälen, Kanalkodierung, Verschlüsselung über die Funkschnittstelle usw. - zuständig. Der Bereich des Kernnetzes CON1, CON2 mit Netzeinrichtungen - wie z.B. Vermittlungseinrichtung MSC, MSC' und Authentifikationseinrichtung AC, AC' - ist hauptsächlich für Angelegenheiten des Routings, der Teilnehmerverwaltung, wie Registrierung (Subscription) der Teilnehmer S1, S2 sowie Authentifikation, Auswahl des Zugangsnetzes ACN usw., und für die Bereitstellung von Diensten verantwortlich. Die Authentifikationsprozeduren in den Einrichtungen AC, AC' benutzen vorzugsweise geheime Schlüssel ki gemäß der bekannten Vorgehensweise nach GSM-Standard, um die Teilnehmerauthentifikation für den im Kernnetz CON1 registrierten Teilnehmer S1 und für den im Kernnetz CON2 registrierten Teilnehmer S2 parallel und unabhängig vom Zugangsnetz ACN auszuführen.

Beide Vermittlungseinrichtungen MSC, MSC' in den Kernnetzen CON1 und CON2 sind im vorliegenden Beispiel an die Basisstationssteuerung BSC des Zugangsnetzes ACN angeschlossen. Die Basisstationssteuerung BSC ermöglicht die Verbindung zu mindestens einer Basisstation, im vorliegenden Beispiel zu der Basisstationen BS. Eine solche Basisstation BS ist eine Funkstation, die zur Abdeckung eines Funkbereichs - z.B. einer Funkzelle - angeordnet ist, um über eine Funkschnittstelle AI Verbindungen von/zu mindestens einer Mobilstation MT, die sich in ihrem Funkbereich aufhält, aufbauen, abbauen und aufrechthalten zu können. Die Informationen sind dabei in einem von der Basisstationssteuerung BSC zugeteilten Funkkanal RCH enthalten. Bei den Verbindungen kann es sich sowohl um abgehende als auch um ankommende Verbindungen handeln. Die Mobilstation MT eignet sich im vorliegenden Beispiel besonders zur gleichzeitigen Nutzung durch mehrere Teilnehmer S1 und S2, die durch ihre teilnehmerspezifischen Einrichtungen SIM (Subscriber Identity Module) an einem - nicht dargestellten - internen Bus parallel hängen und jeweils eine eigene Teilnehmeridentität haben.

Die Mobilstation MT weist eine Speichereinrichtung MSP, eine Sende- und Empfangseinrichtung MSE sowie Steuereinrichtungen MST, MST', die mit Speichereinrichtung MSP und Sende- und Empfangseinrichtung MSE verbunden sind, auf. Ebenso weist die Basisstation BS eine Speichereinrichtung BSP, eine Sende- und Empfangseinrichtung BSE sowie eine Steuereinrichtung BST, die mit Speichereinrichtung BSP und Sende- und Empfangseinrichtung BSE verbunden ist, auf.

Gemäß der Erfindung sendet die Mobilstation MT - stationsbezogen über die Sende- und Empfangseinrichtung MSE - für alle an ihr aktiven Teilnehmer parallel einen ersten öffentlichen Schlüssel PUK1-MT (public key) über die Funkschnittstelle AI aus und merkt sich einen dazugehörigen privaten Schlüssel PRK1-MT (private key), der in der Speichereinrichtung MSP oder in der Steuereinrichtung MST abgelegt ist. Die Basisstation BS verwendet den empfangenen öffentlichen Schlüssel PUK1-MT zur Verschlüsselung der nachfolgend über die Funkschnittstelle AI zu sendenden Informationen. Das Entschlüsseln der von der Basisstation BS gesendeten Informationen ist damit nur der Einrichtung möglich, die den zugehörigen privaten Schlüssel kennt, d.h. der Mobilstation MT mit dem Schlüssel PRK1-MT. In der Antwort der Basisstation BS sendet sie ihrerseits einen öffentlichen Schlüssel PUK-BS in der Gegenrichtung zur Mobilstation MT und merkt sich den dazugehörigen privaten Schlüssel PRK1-BS. Den privaten Schlüssel PRK1-BS speichert die Speichereinrichtung BSP oder die Steuereinrichtung BST. Damit ist sichergestellt, daß auch im folgenden von der Mobilstation MT an die Basisstation BS gesendete Informationen, die unter Verwendung des öffentlichen Schlüssels PUK-BS verschlüsselt sind, nur von der Basisstation BS bzw. deren Steuereinrichtung BST wieder entschlüsselt werden können.

Um zu verhindern, daß eine "Schein"-Basisstation oder nicht authorisierte Basisstation den von der Mobilstation MS übermittelten öffentlichen Schlüssel PUK1-MT zum Senden korrekt verschlüsselter Informationen - zufällig oder absichtlich - benutzen kann, sendet die Mobilstation MT einen zweiten öffentlichen Schlüssel PUK2-MT - bereits verschlüsselt - über die Funkschnittstelle AI zur Basisstation BS. Diesen Schlüssel PUK2-MT kann nur die richtige Basisstation BS, mit der eine vertrauliche Verbindung auf Mobilstationsebene anfangs aufgebaut wurde, lesen und verwenden. Die Schein"-Basisstation oder nicht authorisierte Basisstation ist auf diese sicher ausgeschaltet. Dabei ersetzt der zweite öffentliche Schlüssel PUK2-MT den bisherigen ersten öffentlichen Schlüssel PUK1-MT. Gleiches gilt für die andere Übertragungsrichtung, wenn die gegenseitige Übertragung der Schlüssel von der Basisstation BS initiiert wird.

Die Verschlüsselungsprozedur kann ebenso von der Basisstation BS initiiert werden, sodaß zunächst von der Sende- und Empfangseinrichtung BSE ein erster öffentlicher Schlüssel PUK1-BS, dem ein privater Schlüssel PRK1-BS zugeordnet und in der Steuereinrichtung BST oder der Speichereinrichtung BSP gespeichert ist, zur Mobilstation MT gesendet wird. Diese verwendet den eintreffenden öffentlichen Schlüssel PUK1-BS zur Verschlüsselung der nachfolgenden Informationen und sendet ihrerseits einen öffentlichen Schlüssel PUK-MT zur Basisstation BS, die ihn zur Verschlüsselung der Informationen in der Gegenrichtung verwendet. Anschließend sendet die Basisstation BS vorzugsweise einen zweiten öffentlichen Schlüssel PUK2-BS zur Mobilstation MT, um ganz sicherzugehen, daß sich nicht eine unerwünschte Basisstation in die verschlüsselte Informationsübertragung über den Funkkanal einmischt oder diese abhört. Die öffentlichen wie die privaten Schlüssel bestehen beispielsweise aus einer Zahlenfolge oder Bitfolge.

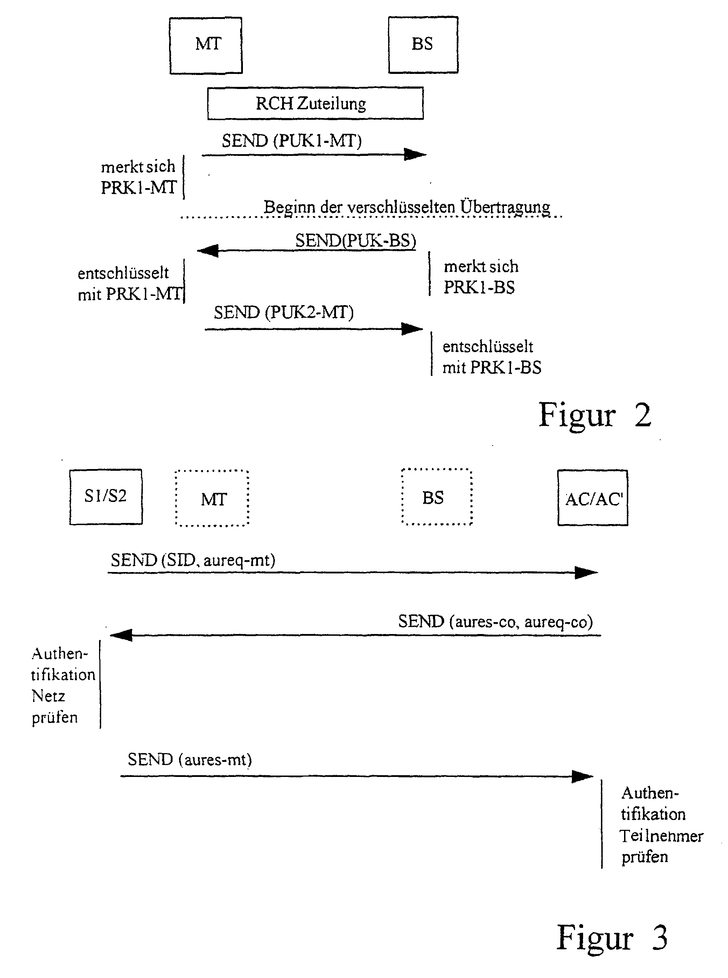

Im Anschluß an die Verschlüsselungsprozedur werden von der Mobilstation MT - vorzugsweise von der nur zur Authentifikation vorgesehenen Einrichtung SIM oder auch von einer für Verschlüsselung und Authentifikation gemeinsam zuständigen Steuereinrichtung MST - die Authentifikation des jeweiligen Kernnetzes CON1, CON2 und von der Einrichtung AC, AC' des Kernnetzes CON1, CON2 die Authentifikation des Teilnehmers S1, S2 anhand wechselseitig gesendeter verschlüsselter Informationen auf Teilnehmerebene durchgeführt (siehe Figur 3). Die bidirektionale Authentifikation läuft damit unabhängig vom Zugangsnetz ACN ab. Die an die Verschlüsselung angehängte Authentifikation stellt maximale Sicherheit bereit, da sie gewährleistet, daß die Gegeneinrichtung der Verbindung wirklich die Einrichtung ist, für die sie sich zu Beginn der Kommunikation ausgegeben hat. Damit wird verhindert, daß die gesamte Kommunikation auf dieser Verbindung von einer Schein"-Basisstation oder nicht authorisierten Basisstation initiiert wurde. Ein weiterer Vorteil der funktionalen Trennung von Verschlüsselung und Authentifikation besteht darin, daß die Teilnehmeridentitäten und die für die Authentifikation erforderlichen Informationen - z.B. Zufallszahl RAND, Antwortsignal SRES (Signed Response) gemäß GSM-Verfahren - bereits verschlüsselt über die Funkschnittstelle AI übertragen werden können. Zur Authentifikation können auch vom GSM-Verfahren abweichende Authentifikationsprozeduren verwendet werden.

An das Zugangsnetz ACN können parallel mehrere Kernnetze - im vorliegenden Beispiel die beiden Kernnetze CON1, CON2 - auch unterschiedlicher Netzart angeschlossen sein. Die Teilnehmer S1, S2 arbeiten mit verschiedenen SIM-Karten gleichzeitig über die eine Mobilstation MT in verschiedenen Kernnetzen - im vorliegenden Beispiel in den beiden Kernnetzen CON1, CON2 - bzw. ein oder mehrere Teilnehmer S1, S2 in einem einzigen Kernnetz, z.B. CON1. Ferner unterstützt die funktionale Trennung von Zugangsnetz ACN und Kernnetz CON1, CON2 auch Konfigurationen, bei denen das Zugangsnetz ACN und das oder die Kernnetze CON1, CON2 unterschiedliche Netzbetreiber aufweisen.

Figur 2 zeigt in schematischer Darstellung den Nachrichtenfluss zur Verschlüsselung der Informationen für die Funkübertragung zwischen der Mobilstation MT und der Basisstation BS des Zugangsnetzes. Dabei ist das Beispiel darauf beschränkt, daß der gegenseitige Austausch der Schlüssel von der Mobilstation MT initiiert wird. Ebenso könnte die Basisstation BS den Austausch beginnen (siehe auch Beschreibung zu Figur 1), der nachfolgende Nachrichtenfluß liefe in entsprechender Weise ab.

Nach der Zuteilung des Funkkanals RCH für einen Verbindungsaufbau zur Kommunikation startet die Mobilstation MT die Verschlüsselung, in dem sie in einer Nachricht SEND den öffentlichen Schlüssel PUK1-MT aussendet und sich den zugehörigen privaten Schlüssel PRK1-MT merkt. Damit hat die verschlüsselte Übertragung von Informationen auf der Funkschnittstelle begonnen. Die Basisstation BS benutzt den eintreffenden Schlüssel PUK1-MT zur verschlüsselten Informationsübertragung in der Gegenrichtung, und sendet ihrerseits den öffentlichen Schlüssel PUK-BS in der Nachricht SEND aus. Auch sie merkt sich den zum öffentlichen Schlüssel PUK-BS gehörigen privaten Schlüssel PRK1-BS. Die verschlüsselt übertragenen Informationen - im vorliegenden Fall zumindest der öffentliche Schlüssel PUK-BS - kann nur von der Mobilstation MT mit Hilfe des nur ihr bekannten privaten Schlüssels PRK1-MT entschlüsselt werden. Nach dem Entschlüsseln sendet die Mobilstation MT in einer weiteren Nachricht SEND einen zweiten öffentlichen Schlüssel PUK2-MT zur Basisstation BS, die die eintreffenden Informationen - im vorliegenden Fall zumindest den zweiten öffentlichen Schlüssel PUK2-MT - mit Hilfe des nur ihr bekannten privaten Schlüssels PRK1-BS entschlüsselt. Dabei ersetzt der zweite öffentliche Schlüssel PUK2-MT den bisherigen ersten öffentlichen Schlüssel PUK1-MT. Damit ist zwischen den beiden Einrichtungen eine vertraute Verbindung ("trusted relationship") hergestellt, in die Dritte keinesfalls eindringen können.

Figur 3 zeigt in schematischer Darstellung den Nachrichtenfluss zur Authentifikation der in verschiedenen Kernnetzen registrierten Teilnehmer S1, S2 und zur Authentifikation des jeweiligen Kernnetzes. Dabei werden Nachrichten zwischen den die Mobilstation MT nutzenden Teilnehmern S1, S2 und der Netzeinrichtung AC, AC' (authentification center) des jeweiligen Kernnetzes transparent für das Zugangsnetz und deren Basisstation übertragen.

Zunächst sendet der Teilnehmer S1 bzw. die Mobilstation MT über die teilnehmerspezifische Einrichtung (SIM) für den Teilnehmer eine Authentifikationsanforderung aureq-mt und eine Teilnehmeridentität SID - auf Grund der teilnehmerbezogenen SIM-Karte - in der Nachricht SEND zur Einrichtung Ac des für den Teilnehmer S1 zuständigen Kernnetzes aus. Dabei erfolgt die Übertragung der Informationen verschüsselt. In der Gegenrichtung sendet die Einrichtung AC eine Authentifikationsantwort aures-co in der Nachricht SEND an die Mobilstation MT zurück, die die Authentifikationsprozedur - mit vorzugsweise geheimem Schlüssel - zur Überprüfung der Authentifikation für das Kernetz durchführt. Vorzugsweise wird gleichzeitig mit der Authentifikationsantwort aures-co eine Authentifikationsanforderung aureq-co von der Einrichtung AC des Kernnetzes verschlüsselt mitgesendet und von der Mobilstation MT empfangen. Daraufhin sendet die Mobilstation teilnehmerbezogen eine Authentifikationsantwort aures-mt in der Nachricht SEND an die Einrichtung AC verschlüsselt zurück, die die Authentifikationsprozedur zur Überprüfung der Teilnehmerauthentifikation - ebenfalls unter Verwendung vorzugsweise geheimer Schlüssel - ausführt. Eine Authentifikation nur in einer Richtung - d.h. nur für die Teilnehmer oder das Netz - ist prinzipiell auch möglich.

Der Ablauf zur Authentifikation des Teilnehmers S2 erfolgt in entsprechender Weise durch Austausch der Nachrichten SEND mit obigen Inhalten zwischen der entsprechenden teilnehmerspezifischen Einrichtung (SIM) der Mobilstation MT und der für ihn zuständigen Netzeinrichtung AC' des anderen Kernnetzes. Durch die Kombination von Verschlüsselung auf der Funkschnittstelle von/zu dem Zugangsnetz, erzielt anhand anhand mehrfach ausgetauschter öffentlicher Schlüssel auf Mobilstationsebene, und nachfolgender Authentifikation mit geheimen Schlüsseln auf Teilnehmerebene von/zu dem Kernnetz unabhängig vom Zugangsnetz wird maximale Sicherheit erreicht und dennoch bleiben Zugangsnetz - verantwortlich für Verschlüsselung - und Kernnetz(e) - verantwortlich für Authentifikation - funktional getrennt.

## Patentansprüche

1. Verfahren zur Verschlüsselung von Informationen für eine Funkübertragung und zur Authentifikation von Teilnehmern (S1, S2) in einem Kommunikationssystem (UNM), das
- ein Zugangsnetz (ACN) mit Einrichtungen (BS, BSC) für die Funkübertragung sowie mindestens ein Kernnetz (CON1, CON2) mit jeweils einer Einrichtung (AC, AC') für die Teilnehmerauthentifikation aufweist,
- einen Funkkanal (RCH) zur Übertragung der Informationen über eine Funkschnittstelle(AI) von/zu mindestens einer Basisstation (BS) des Zugangsnetzes (ACN) zuteilt,
bei dem
- zwischen einer Mobilstation (MT) und der Basisstation (BS) über die Funkschnittstelle (AI) wechselseitig öffentliche Schlüssel (PUK1-MT, PUK-BS) gesendet werden,
- der von der Basisstation (BS) bzw. Mobilstation (MT) empfangene öffentliche Schlüssel (PUK1-MT bzw. PUK-BS) zur Verschlüsselung der nachfolgend über die Funkschnittstelle (AI) zu sendenden Informationen verwendet wird,
- die von der Mobilstation (MT) bzw. Basisstation (BS) empfangenen verschlüsselten Informationen anhand eines privaten Schlüssels (PRK1-MT, PRK1-BS), der dem gesendeten öffentlichen Schlüssel (PUK1-MT, PUK-BS) in der Mobilstation (MT) bzw. in der Basisstation (BS) zugeordnet ist, entschlüsselt werden, und bei dem
- von einer teilnehmerspezifischen Einrichtung (SIM) der Mobilstation (MT) die Authentifikation des jeweiligen Kernnetzes (CON1, CON2) und von der Einrichtung (AC, AC') des Kernnetzes (CON1, CON2) die Authentifikation des Teilnehmers (S1, S2) anhand wechselseitig gesendeter verschlüsselter Informationen durchgeführt werden.

2. Verfahren nach Anspruch 1, bei dem
- zunächst von der Mobilstation (MT) ein erster öffentlicher Schlüssel (PUK1-MT) zur Basisstation (BS) gesendet wird, die ihn zur Verschlüsselung der zur Mobilstation (MT) zu sendenden Informationen verwendet,
- von der Basisstation (BS) ein öffentlicher Schlüssel (PUK-BS) zur Mobilstation (MT) gesendet wird, die ihn zur Verschlüsselung der zur Basisstation (BS) zu sendenden Informationen Informationen verwendet, und danach
- von der Mobilstation (MT) ein zweiter öffentlicher Schlüssel (PUK2-MT) zur Basisstation (BS) gesendet wird.

3. Verfahren nach Anspruch 2, bei dem
der zweite öffentliche Schlüssel (PUK2-MT) den ersten zur Basisstation (BS) gesendeten Schlüssel (PUK1-MT) ersetzt.

4. Verfahren nach Anspruch 1, bei dem
- zunächst von der Basisstation (BS) ein erster öffentlicher Schlüssel (PUK1-BS) zur Mobilstation (MT) gesendet wird, die ihn zur Verschlüsselung der zur Basisstation (BS) zu sendenden Informationen verwendet,
- von der Mobilstation (MT) ein öffentlicher Schlüssel (PUK-MT) zur Basisstation (BS) gesendet wird, die ihn zur Verschlüsselung der zur Mobilstation (MT) zu sendenden Informationen verwendet, und danach
- von der Basisstation (BS) ein zweiter öffentlicher Schlüssel (PUK2-BS) zur Mobilstation (MT) gesendet wird.

5. Verfahren nach Anspruch 4, bei dem
der zweite öffentliche Schlüssel (PUK2-BS) den ersten zur Basisstation (BS) gesendeten Schlüssel (PUK1-BS) ersetzt.

6. Verfahren nach einem der vorhergehenden Ansprüche, bei dem
- von der Mobilstation (MT) eine Teilnehmeridentität (SID) des Teilnehmers (S1, S2) und eine Authentifikationsanforderung (aureq-mt) an das Kernnetz (CON1, CON2) verschlüsselt gesendet und von der Einrichtung (AC, AC') des Kernnetzes (CON1, CON2) eine Authentifikationsantwort (aures-co) verschlüsselt rückgesendet wird,
- von der Mobilstation (MT) eine Authentifikationsprozedur zur Überprüfung der Identität des Kernnetzes (CON1, CON2) ausgeführt wird.

7. Verfahren nach Anspruch 6, bei dem
- von der Einrichtung (AC, AC') des Kernnetzes (CON1, CON2) eine Authentifikationsanforderung (aureq-co) zusätzlich zu der Authentifikationsantwort (aures-co) verschlüsselt gesendet und von der Mobilstation (MT) eine Authentifikationsantwort (aures-mt) an die Einrichtung (AC) verschlüsselt rückgesendet wird,
- von der Einrichtung (AC, AC') eine Authentifikationsprozedur zur Überprüfung der Teilnehmeridentität (SID) ausgeführt wird.

8. Verfahren nach einem der vorhergehenden Ansprüche, bei dem für die Authentifikationsprozedur geheime Schlüssel (ki) verwendet werden.

9. Verfahren nach einem der vorhergehenden Ansprüche, bei dem von dem Zugangsnetz (ACN) parallel mindestens zwei Kernnetze (CON1, CON2) bedient und ein oder mehrere Teilnehmer (S1, S2), die die Mobilstation (MT) parallel nutzen können, in verschiedenen Kernnetzen (CON1, CON2) registriert und authentifiziert werden.

10. Verfahren nach einem der Ansprüche 1 bis 8, bei dem von dem Zugangsnetz (ACN) ein Kernnetz (CON1) bedient wird, in dem mehrere Teilnehmer (S1, S2), die die Mobilstation (MT) parallel nutzen können, registriert und authentifiziert werden.

11. Verfahren nach einem der vorhergehenden Ansprüche, bei dem das Zugangsnetz (ACN) und das oder die Kernnetze (CON1, CON2) von unterschiedlichen Netzbetreibern verwaltet werden.

12. Kommunikationssystem zur Verschlüsselung von Informationen für eine Funkübertragung und zur Authentifikation von Teilnehmern (S1, S2), mit
- einem Zugangsnetz (ACN) mit Einrichtungen (BS, BSC) für die Funkübertragung sowie mindestens einem Kernnetz (CON1, CON2) mit jeweils einer Einrichtung (AC, AC') für die Teilnehmerauthentifikation,
- einem Funkkanal (RCH) zur Übertragung der Informationen über eine Funkschnittstelle (AI) von/zu mindestens einer Basisstation (BS) des Zugangsnetzes (ACN),
und mit
- Speichereinrichtungen (MSP, BSP) in einer Mobilstation (MT) und in der Basisstation (BS) zum Speichern öffentlicher Schlüssel (PUK1-MT, PUK-BS) und privater Schlüssel (PRK1-BS, PRK1-BS), die den öffentlichen Schlüsseln (PUK1-MT, PUK-BS) zugeordnet sind,
- Sendeeinrichtungen (MSE, BSE) in der Mobilstation (MT) und in der Basisstation (BS) zum wechselseitigen Senden der öffentlichen Schlüssel (PUK1-MT, PUK-BS) über die Funkschnittstelle (AI),
- Steuereinrichtungen (MST, BST) in der Mobilstation (MT) und in der Basisstation (BS) zur Verschlüsselung der nachfolgend über die Funkschnittstelle (AI) zu sendenden Informationen unter Verwendung der von der Basisstation (BS) bzw. Mobilstation (MT) empfangenen öffentlichen Schlüssel (PUK1-MT bzw. PUK-BS) und zur Entschlüsselung der empfangenen verschlüsselten Informationen anhand des gespeicherten zugehörigen privaten Schlüssels (PRK1-MT, PRK1-BS), und mit
- einer teilnehmerspezifischen Einrichtung (SIM) in der Mobilstation (MT) und einer Einrichtung (AC, AC') im jeweiligen Kernnetz (CON1, CON2) zur Durchführung der Authentifikation des Kernnetzes (CON1, CON2) sowie der Authentifikation der Teilnehmer (S1, S2) anhand wechselseitig gesendeter verschlüsselter Informationen.

13. Kommunikationssystem nach Anspruch 12, mit
einem Zugangsnetz (ACN), an das parallel mindestens zwei Kernnetze (CON1, CON2) zur Registrierung und Authentifikation eines oder mehrerer Teilnehmer (S1, S2), die die Mobilstation (MT) parallel nutzen können, in verschiedenen Kernnetzen (CON1, CON2) angeschlossen sind.

14. Kommunikationssystem nach Anspruch 12, mit
einem Zugangsnetz (ACN), an das ein Kernnetz (CON1) zur Registrierung und Authentifikation mehrerer Teilnehmer (S1, S2), die die Mobilstation (MT) parallel nutzen können, angeschlossen ist.

15. Kommunikationssystem nach einem der vorhergehenden Ansprüche, mit
einem Zugangsnetz (ACN) und einem oder mehreren Kernnetzen (CON1, CON2), die unterschiedliche Netzbetreiber aufweisen.

## Claims

1. Method for encryption of information for radio transmission and for authentication of subscribers (S1, S2) in a communication system (UNM) which
- has an access network (ACN) with devices (BS, BSC) for radio transmission, and has at least one core network (CON1, CON2), each having a device (AC, AC') for subscriber authentication,
- allocates a radio channel (RCH) for transmission of information via a radio interface (AI) from/to at least one base station (BS) in the access network (ACN),
in which
- public keys (PUK1-MT, PUK-BS) are sent in both directions via the radio interface (AI) between a mobile station (MT) and the base station (BS),
- the public key (PUK1-MT or PUK-BS) received by the base station (BS) or the mobile station (MT) is used for encryption of the information which is subsequently to be sent via the radio interface (AI),
- the encrypted information received by the mobile station (MT) or base station (BS) is decrypted using a private key (PRK1-MT, PRK1-BS) which is associated with the transmitted public key (PUK1-MT, PUK-BS) in the mobile station (MT) or in the base station (BS), and in which
- a subscriber-specific device (SIM) in the mobile station (MT) carries out the authentication of the respective core network (CON1, CON2), and the device (AC, AC') in the core network (CON1, CON2) carries out the authentication of the subscriber (S1, S2) on the basis of encrypted information which is transmitted in both directions.

2. Method according to Claim 1, in which
- a first public key (PUK1-MT) is first of all sent from the mobile station (MT) to the base station (BS), which uses it for encryption of the information to be sent to the mobile station (MT),
- the base station (BS) sends a public key (PUK-BS) to the mobile station (MT), which uses it for encryption of the information to be sent to the base station (BS), and then,
- the mobile station (MT) sends a second public key (PUK2-MT) to the base station (BS).

3. Method according to Claim 2, in which
the second public key (PUK2-MT) replaces the first key (PUK1-MT) sent to the base station (BS).

4. Method according to Claim 1, in which
- first of all, the base station (BS) sends a first public key (PUK1-BS) to the mobile station (MT), which uses it for encryption of the information to be sent to the base station (BS),
- the mobile station (MT) sends a public key (PUK-MT) to the base station (BS), which uses it for encryption of the information to be sent to the mobile station (MT), and then,
- the base station (BS) sends a second public key (PUK2-BS) to the mobile station (MT).

5. Method according to Claim 4, in which
the second public key (PUK2-BS) replaces the first key (PUK1-BS) sent to the base station (BS).

6. Method according to one of the preceding claims, in which
- the mobile station (MT) sends a subscriber identity (SID) for the subscriber (S1, S2) and an authentication request (aureq-mt) in encrypted form to the core network (CON1, CON2), and the device (AC, AC') in the core network (CON1, CON2) sends back an authentication response (aures-co) in encrypted form,
- the mobile station (MT) carries out an authentication procedure to check the identity of the core network (CON1, CON2).

7. Method according to Claim 6, in which
- the device (AC, AC') in the core network (CON1, CON2) sends, in encrypted form, an authentication request (aureq-co) in addition to the authentication response (aures-co), and the mobile station (MT) sends back an authentication response (aures-mt), in encrypted form, to the device (AC),
- the device (AC, AC') carries out an authentication procedure to check the subscriber identity (SID).

8. Method according to one of the preceding claims, in which secret keys (ki) are used for the authentication procedure.

9. Method according to one of the preceding claims, in which the access network (ACN) controls at least two core networks (CON1, CON2) in parallel, and one or more subscribers (S1, S2) who can use the mobile station (MT) in parallel are registered and authenticated in different core networks (CON1, CON2).

10. Method according to one of Claims 1 to 8, in which the access network (ACN) controls a core network (CON1) in which a number of subscribers (S1, S2) who can use the mobile station (MT) in parallel are registered and authenticated.

11. Method according to one of the preceding claims, in which the access network (ACN) and the core network or networks (CON1, CON2) are administered by different network operators.

12. Communication system for encryption of information for radio transmission and for authentication of subscribers (S1, S2), having
- an access network (ACN) with devices (BS, BSC) for radio transmission, and at least one core network (CON1, CON2), each having a device (AC, AC') for subscriber authentication,
- a radio channel (RCH) for transmission of information via a radio interface (AI) from/to at least one base station (BS) in the access network (ACN),
and having
- memory devices (MSP, BSP) in a mobile station (MT) and in the base station (BS) for storage of public keys (PUK1-MT, PUK-BS) and private keys (PRK1-BS, PRK1-BS) which are associated with the public keys (PUK1-MT, PUK-BS),
- transmitting devices (MSE, BSE) in the mobile station (MT) and in the base station (BS) for sending public keys (PUK1-MT, PUK-BS) in both directions via the radio interface (AI),
- control devices (MST, BST) in the mobile station (MT) and in the base station (BS) for encryption of the information that is subsequently to be sent via the radio interface (AI), using the public keys (PUK1-MT and PUK-BS) received by the base station (BS) or mobile station (MT) and for encryption of the received encrypted information on the basis of the stored associated private key (PRK1-BS, PRK1-BS), and having
- a subscriber-specific device (SIM) in the mobile station (MT), and a device (AC, AC') in the respective core network (CON1, CON2), for carrying out the authentication of the core network (CON1, CON2) and the authentication of the subscribers (S1, S2) on the basis of encrypted information sent in both directions.

13. Communication system according to Claim 12, having an access network (ACN) to which at least two core networks (CON1, CON2) are connected in parallel for registration and authentication of one or more subscribers (S1, S2), who may use the mobile station (MT) in parallel, in different core networks (CON1, CON2).

14. Communication system according to Claim 12, having an access network (ACN) to which a core network (CON1) is connected for registration and authentication of a number of subscribers (S1, S2) who can use the mobile station (MT) in parallel.

15. Communication system according to one of the preceding claims, having
an access network (ACN) and one or more core networks (CON1, CON2) which have different network operators.

## Revendications

1. Procédé destiné au cryptage d'informations pour une transmission par radio et à l'identification d'utilisateurs (S1, S2) dans un système de communication (UNM)
- qui comporte un réseau d'accès (ACN) avec des dispositifs (BS, BSC) pour la transmission par radio, ainsi qu'au moins un réseau principal (CON1, CON2) ayant chacun un dispositif (AC, AC') pour l'identification des utilisateurs,
- qui affecte un canal radio (RCH) pour la transmission, à travers une interface radio (AI), des informations provenant / allant vers au moins une station de base (BS) du réseau d'accès (ACN),
dans lequel
- on envoie réciproquement, entre un poste mobile (MT) et la station de base (BS), par l'intermédiaire de l'interface radio (AI), des clefs publiques (PUK1-MT, PUK-BS),
- on utilise la clef publique (PUK1-MT ou, réciproquement, PUK-BS) reçue de la station de base (BS) ou, réciproquement, du poste mobile (MT) pour crypter les informations à envoyer ensuite par l'intermédiaire de l'interface radio (AI),
- on décrypte les informations cryptées, reçues du poste mobile (MT) ou, réciproquement, de la station de base (BS), à l'aide d'une clef privée (PRK1-MT, PRK1-BS), qui correspond, dans le poste mobile (MT) ou, réciproquement, la station de base (BS), à la clef publique (PUK1-MT, PUK-BS) et dans lequel
- un dispositif (SIM) du poste mobile (MT), spécifique à l'utilisateur, procède à l'identification du réseau principal respectif (CON1, CON2) et le dispositif (AC, AC') du réseau principal (CON 1, CON2) procède à l'identification de l'utilisateur (S1, S2) à l'aide d'informations cryptées envoyées réciproquement.

2. Procédé selon la revendication 1 dans lequel
- le poste mobile (MT) envoie d'abord une première clef publique (PUK1-MT) à la station de base (BS) qui l'utilise pour crypter les informations à envoyer au poste mobile (MT),
- la station de base (BS) envoie une clef publique (PUK-BS) au poste mobile (MT) qui l'utilise pour crypter les informations à envoyer à la station de base (BS) et, ensuite,
- le poste mobile (MT) envoie une deuxième clef publique (PUK2-MT) à la station de base (BS).

3. Procédé selon la revendication 2 dans lequel
la deuxième clef publique (PUK2-MT) remplace la première clef (PUK1-MT) envoyée à la station de base (BS).

4. Procédé selon la revendication 1 dans lequel
- la station de base (BS) envoie d'abord une première clef publique (PUK1-BS) au poste mobile (MT) qui l'utilise pour crypter les informations à envoyer à la station de base (BS),
- le poste mobile (MT) envoie une clef publique (PUK-MT) à la station de base (BS) qui l'utilise pour crypter les informations à envoyer au poste mobile (MT) et, ensuite,
- la station de base (BS) envoie une deuxième clef publique (PUK2-BS) au poste mobile (MT).

5. Procédé selon la revendication 4 dans lequel
la deuxième clef publique (PUK2-BS) remplace la première clef (PUK1-BS) envoyée à la station de base (BS).

6. Procédé selon l'une des revendications précédentes dans lequel
- le poste mobile (MT) envoie, sous forme cryptée, une identité d'utilisateur (SID) de l'utilisateur (S1, S2) et une demande d'identification (aureq-mt) au réseau principal (CON1, CON2) et le dispositif (AC, AC') du réseau principal (CON1, CON2) renvoie, sous forme cryptée, une réponse d'identification (aures-co),
- le poste mobile (MT) exécute une procédure d'identification pour vérifier l'identité du réseau principal (CON1, CON2).

7. Procédé selon la revendication 6 dans lequel
- le dispositif (AC, AC') du réseau principal (CON 1, CON2) envoie en plus de la réponse d'identification (aures-co), sous forme cryptée, une demande d'identification (aureq-co) et le poste mobile (MT) renvoie, sous forme cryptée, une réponse
- d'identification (aures-mt) au dispositif (AC),
- le dispositif (AC, AC') exécute une procédure d'identification pour vérifier l'identité de l'utilisateur (SID).

8. Procédé selon l'une des revendications précédentes dans lequel
des clefs secrètes (ki) sont utilisées pour la procédure d'identification.

9. Procédé selon l'une des revendications précédentes dans lequel
le réseau d'accès (ACN) dessert en parallèle au moins deux réseaux principaux (CON1, CON2) et un ou plusieurs utilisateurs (S1, S2), qui peuvent utiliser en parallèle le poste mobile (MT), sont enregistrés et identifiés dans des réseaux principaux différents (CON1, CON2).

10. Procédé selon l'une des revendications 1 à 8 dans lequel
le réseau d'accès (ACN) dessert un réseau principal (CON 1) dans lequel plusieurs utilisateurs (S1, S2), qui peuvent utiliser en parallèle le poste mobile (MT), sont enregistrés et identifiés.

11. Procédé selon l'une des revendications précédentes dans lequel
le réseau d'accès (ACN) et le ou les réseaux principaux (CON1, CON2) sont gérés par des opérateurs différents.

12. Sstème de communication, destiné au cryptage d'informations pour une transmission par radio et à l'identification d'utilisateurs (S1, S2), comportant
- un réseau d'accès (ACN) avec des dispositifs (BS, BSC) pour la transmission par radio, ainsi qu'au moins un réseau principal (CON1, CON2) ayant chacun un dispositif (AC, AC") pour l'identification des utilisateurs,
- un canal radio (RCH) pour la transmission, à travers une interface radio (AI), des informations provenant de / allant vers au moins une station de base (BS) du réseau d'accès (ACN),
et comportant
- des dispositifs de mémorisation (MSP, BSP) dans un poste mobile (MT) et dans la station de base (BS) destinés à mémoriser des clefs publiques (PUK1-MT, PUK-BS) et des clefs privées (PRK1-BS, PRK1-BS) qui sont affectées aux clefs publiques (PUK1-MT, PUK-BS),
- des dispositifs d'émission (MSE, BSE) dans le poste mobile (MT) et dans la station de base (BS) destinés à envoyer réciproquement des clefs publiques (PUK1-MT, PUK-BS) à travers l'interface radio (AI),
- des dispositifs de commande (MST, BST) dans le poste mobile (MT) et dans la station de base (BS) destinés à crypter les informations à envoyer ensuite à travers l'interface radio (AI) en utilisant les clefs publiques (PUK1-MT et, réciproquement, PUK-BS) reçues de la station de base (BS) et, réciproquement, du poste mobile (MT) et à décrypter les informations cryptées reçues à l'aide de la clef privée correspondante mémorisée (PRK1-MT, PRK1-BS) et comportant
- un dispositif (SIM) spécifique à l'utilisateur dans le poste mobile (MT) et un dispositif (AC, AC') dans le réseau principal respectif (CON1, CON2) destinés à procéder à l'identification du réseau principal (CON1, CON2), ainsi qu'à l'identification des utilisateurs (S1, S2) à l'aide d'informations cryptées envoyées réciproquement.

13. Système de communication selon la revendication 12 comportant
un réseau d'accès (ACN) sur lequel sont raccordés en parallèle au moins deux réseaux principaux (CON 1, CON2) destinés à l'enregistrement et à l'identification d'un ou de plusieurs utilisateurs (S1, S2), qui peuvent utiliser en parallèle le poste mobile (MT) et qui sont raccordés à des réseaux principaux différents (CON1, CON2).

14. Système de communication selon la revendication 12 comportant
un réseau d'accès (ACN) sur lequel est raccordé un réseau principal (CON1) destiné à l'enregistrement et à l'identification de plusieurs utilisateurs (S1, S2), qui peuvent utiliser en parallèle le poste mobile (MT).

15. Système de communication selon l'une des revendications précédentes comportant
un réseau d'accès (ACN) et un ou plusieurs réseaux principaux (CON1, CON2) qui ont des opérateurs différents.
